# EUROPEAN PATENT APPLICATION

(11) **EP 1 728 772 A1**
(43) Date of publication of application: **06.12.2006**
(21) Application number: 06011223.2
(22) Date of filing: 31.05.2006
(51) Int. Cl.: C04B 33/13, C03C 14/00

(54) **Mix for manufacturing ceramic articles**

(30) Priority: 01.06.2005 IT MO20050133
(71) Applicant: Ceramiche Eurotiles S.p.A., 42030 Viano - fraz. La Fabbrica RE (IT)
(72) Inventor: Ingrami, Mauro, 41100 Modena (IT)
(74) Representative: Brogi, Graziano

(57) **Abstract**

This invention refers to a mix for manufacturing ceramic articles which comprises at least one aqueous mixture of synthetic polymers soluble in water and at least one composition consisting of at least one vitreous matrix compound.

## Description

This invention refers to a mix for manufacturing ceramic articles, especially porcelain stoneware.

As is known, traditional ceramic articles are the result of firing, at pre-established temperatures, mixtures of minerals, called mixes, which are mixed together along with more or less large quantities of water.

The minerals in the mix first of all permit shaping the articles and then, by transforming into new components due to firing, they represent the body of the ceramic article.

Before shaping, the ceramic mixes can be in the form of dry powders, powders in water suspension (slips), meaning plastically deformable paste.

In paste state, the mixes usually consist of a mixture of different components: inert minerals (quartz, blast furnace slag, volcanic ashes, pumice stone, etc.,), vitrifying/melting substances (feldspar rocks, common glass, etc.) and clays, often present in large quantities and containing large doses of water in the form of residual humidity, which gives the mixture the physicality and plasticity needed to be shaped.

These components are mixed and amalgamated inside special mixing machines; the mix mixed this way is then left to season in special conditions of humidity and temperature for a preset period of time and is then mixed again inside a mixer-degassing unit which splits it up, removes the air contained inside, especially in the clays, and re-amalgamates it, bringing it to best conditions of humidity and consistency for shaping.

Shaping is done by means of extrusion units, auger units, presses or the like, able to plastically deform the mixture and give it a profile or a complete pre-established shape.

The semi-finished ceramic articles must then be dried inside dryers so they acquire the cohesion and solidity needed for the operations of refinishing and placing in the kilns and to prevent too much and quick evaporation causing deformations, breakages or even explosion of the pieces during subsequent firing in the kilns.

These mixes in plastic state are not without drawbacks including the fact that the presence of large quantities of clays inside them makes them hard to obtain, work and use.

The clays commonly used in the ceramic field in fact degrade considerably when brought up to certain temperatures.

The clays also contain organic substances that can be harmful to the production process of ceramic articles, as well as the larger part of the air contained in the mix and which, inconveniently, has to be removed using mixer-degassing units.

Minerals such as clays, moreover, are very sensitive to temperature changes and consequently the article drying and firing phases must be done very slowly, with considerable additional costs in terms of time and energy consumption.

During firing, moreover, the temperature inside the kilns can inconveniently reach very high levels to allow the transformation of the clays into the new components making up the body of the finished ceramic article; to manufacture porcelain stoneware articles for example, the clays could need firing at a temperature above 1250°C.

The achievement of such high temperatures is possible, obviously, only by means of very sophisticated kilns and kiln-building materials, a degree of sophistication that can often, from an economic viewpoint, only be achieved through heavy investments and high maintenance costs.

Nor should it be forgotten that obtaining clays to supply ceramic industries has major consequences of an environmental nature, as this requires more or less deep quarrying in regions rich in such minerals, with consequent modification of the adjacent area.

It must also be pointed out that the machines used to form the ceramic articles obtained starting with traditional mixes (extruders, auger units and presses) are usually complex, costly and not always easy and fast to operate, above all because they require laborious setting up and size change operations.

A primary aim of this invention is to eliminate the drawbacks of known technology complained of above by excogitating a mix for the manufacture of ceramic articles which can be obtained in a practical and easy way starting with components readily available on the market and with a very restricted environmental impact.

As part of such technical aim, another purpose of the present invention is to be processed and used in a simple way, through methods of safe use and effective operation, as well as of a relatively low cost, thus allowing to make the manufacturing plants of ceramic articles simpler and cheaper.

This aim and these purposes are all achieved by this mix for manufacturing ceramic articles, characterized by the fact that it comprises at least one aqueous mixture of synthetic polymers soluble in water and at least one composition consisting of at least one vitreous matrix compound.

Further characteristics and advantages of this invention will appear even more evident from the detailed description of a preferred, but not exclusive, form of embodiment of a mix for manufacturing ceramic articles, illustrated by way of non limiting example.

To obtain the mix according to the invention, the aqueous mixture is prepared separately by dissolving the soluble polymers in a quantity of water such as to make sure the ratio between polymer weight and water weight is substantially identical.

The vitreous matrix compound in the composition is common glass, used in the form of finely ground powders.

Besides the vitreous matrix compound, the composition can also contain one or more inert materials, of the quartz type (Si02) in the state of coloured powders or grains (glass, basalt, fired waste of the same ground mix).

In a possible, but not exclusive form of embodiment of the invention, the mix comprises the following weight concentrations evaluated with respect to the overall weight of the composition (vitreous matrix compound + inert material):

| | |
|---|---|
| vitreous matrix compound | 5 - 100 % |
| inert material | 0 - 95 % |
| aqueous soluble polymer mixture | 10 - 30 % |

Preferably, the aqueous mixture of soluble polymers is present in a weight concentration equal to about 20% of the composition.

The presence of higher or lower quantities of vitreous matrix compound strongly affects the mix firing phase and, especially, its vitrification, making it possible to considerably change the final composition of the articles.

The main function of the aqueous mixture of soluble polymers, on the other hand, is to bind together the glass and inert particles, giving the mix special physical and plastic properties, even in the absence of traditional clay minerals.

Both of the above mix properties, furthermore, are considerably affected by the grain size of the vitreous matrix compound powders and of the inert material used.

The average technician in the field can, from time to time, evaluate and choose the best ratio between the concentrations of the aqueous mixture of soluble polymers, of vitreous matrix compound and of inert material, as well as the grain size of the different powders introduced into the mix, in order to obtain articles with pre-established physical and chemical characteristics such as, for instance, porcelain stoneware that is frost resistant and with high resistance to mechanical stress and chemical attack.

Although the clays are not strictly necessary to make the mix according to the invention, nevertheless, more or less small traces of clay minerals can be used and introduced into the mix according to the type of application.

Such mix can be used to manufacture ceramic articles using a procedure that envisages a phase of preparation of the aqueous mixture of soluble polymers, and a phase of mixing the aqueous mixture together with the vitreous matrix compound and, if necessary, with the inert materials and the clays, until a mix is obtained that is deformable in its plastic state and can be modelled by means of a subsequent rolling phase.

In such rolling phase, the mix is introduced into a rolling mill featuring two series of parallel and counter-rotating rollers, through which the mix is passed so as to flatten it and give it a sheet-like appearance; in this respect, it should be noted that by changing the relevant distance between the two series of rollers, the thickness of the articles can be changed in a practical and easy way.

At this point, the mix looks like a flattened loaf which can be cut crossways into single articles of any size using known methods, for example using one or more cutters.

The manufacturing procedure includes a mix drying phase in a dryer and a subsequent firing stage in a kiln.

Usefully, the heat cycle the articles have to undergo during firing depends on the type of mix that has been prepared and type of article to be manufactured.

More specifically, to achieve the vitrification of the mix and obtain porcelain stoneware articles, the maximum temperature to be reached during firing is preferably between 850 and 980 °C, while the duration of the heat cycle, which changes from kiln to kiln, is preferably between 35 and 75 minutes.

Before placing in the kiln and firing, the dried articles can be introduced into a glazing unit able to cover the visible surface with a layer of glaze, which can also be coloured.

In practice it has been found that the described invention achieves the intended purposes.

The particular solution of using an aqueous mixture of synthetic polymers instead of traditional clays, in fact, makes it possible to eliminate the problems related to the latter, permitting, in detail, the abandonment of costly traditional technologies such as mixing-degassing units, extruders, auger machines, presses and the like, as well as the speeding up of the drying and firing stages, thereby reducing the time the articles are exposed to heat, the maximum temperatures reached during the heat cycles and, in general, the overall energy consumptions of the relevant systems.

The invention thus conceived is susceptible of numerous modifications and variations, all of which falling within the scope of the inventive concept.

Furthermore all the details can be replaced with others that are technically equivalent.

In practice, the materials used, as well as the shapes and dimensions, may be any according to requirements without because of this moving outside the protection scope of the following claims.

## Claims

1. Mix for manufacturing ceramic articles, **characterized by** the fact that it comprises at least one aqueous mixture of synthetic polymers soluble in water and at least one composition consisting of at least one vitreous matrix compound.

2. Mix according to claim 1, **characterized by** the fact that said vitreous matrix compound is common glass.

3. Mix according to one or more of the preceding claims, **characterized by** the fact that said vitreous matrix compound is in the form of powders.

4. Mix according to one or more of the preceding claims, **characterized by** the fact that said composition consists of at least one inert material.

5. Mix according to one or more of the preceding claims, **characterized by** the fact that said inert material is quartz (Si02).

6. Mix according to one or more of the preceding claims, **characterized by** the fact that said inert material consists of coloured grains.

7. Mix according to one or more of the preceding claims, **characterized by** the fact that said inert material is in the form of powders.

8. Mix according to one or more of the preceding claims, **characterized by** the fact that it comprises said vitreous matrix compound, said inert material and said aqueous mixture of soluble polymers in the following weight concentrations evaluated with respect to the overall weight of said composition :
| | |
|---|---|
| vitreous matrix compound | 5-100% |
| inert material | 0-95% |
| aqueous soluble polymer mixture | 10-30% |

9. Mix according to one or more of the preceding claims, **characterized by** the fact that said aqueous mixture of soluble polymers comprises quantities in weight of water and said soluble polymers substantially identical.

10. Mix according to one or more of the preceding claims, **characterized by** the fact that said composition comprises clay.

11. Manufacturing procedure of ceramic articles starting from a mix according to claims from 1 to 10, **characterized by** the fact that it comprises the following phases:
- preparing an aqueous mixture of synthetic polymers soluble in water;
- mixing said aqueous mixture of soluble polymers together with at least one vitreous matrix compound;
- rolling said mix by means of at least two parallel counter-rotating rollers;
- drying said mix;
- firing said mix.

12. Procedure according to one or more of the preceding claims, **characterized by** the fact that said mixing consists of amalgamating at least one inert material with said aqueous mixture of soluble polymers and said vitreous matrix compound.

13. Procedure according to one or more of the preceding claims, **characterized by** the fact that said firing comprises vitrifying said mix.

14. Procedure according to one or more of the preceding claims, **characterized by** the fact that the maximum temperature achieved during said firing is substantially between 850 and 980 °C.

15. Procedure according to one or more of the preceding claims, **characterized by** the fact that the duration of said firing is between 35 and 75 minutes.
